# EUROPEAN PATENT SPECIFICATION

(11) **EP 3 353 667 B1**
(45) Date of publication and mention of the grant of the patent: **30.12.2020**
(21) Application number: 15770844.7
(22) Date of filing: 22.09.2015
(51) Int. Cl.: G06F 13/40, G06F 13/42

(54) **MODULAR BACKPLANE**
MODULARE RÜCKWANDPLATINE
FOND DE PANIER MODULAIRE

(43) Date of publication of application: 01.08.2018
(73) Proprietor: OVH, 59100 Roubaix (FR)
(72) Inventor: KLABA, Miroslaw Pierre, F-59100 Roubaix (FR)
(74) Representative: BCF Global
(86) International application number: PCT/EP2015/071801
(87) International publication number: WO 2017/050359

(56) References cited:
- US-A- 4 700 274
- US-A- 4 811 275
- US-A1- 2003 101 426

## Description

### FIELD OF THE INVENTION

The present invention relates generally to data storage systems and more specifically to backplanes intended to be incorporated within such data storage systems.

### BACKGROUND OF THE INVENTION

As more and more online applications and services are being made available over networks (such as Internet, intranets, and/or extranets), network operators (or service providers) are asked to keep their data storage systems up-to-date with the latest technological advances.

In this regard, backplane-based data servers or storage servers are mainly composed of backplanes disposed in a chassis and to which a plurality of printed circuit board modules (or service cards) and storage units are mounted.

In particular, printed circuit board modules are subject to constant innovative research and design so as to meet constantly changing requirements. This concerns both hardware and software components of printed circuit board modules (e.g. processors, clock generators, chips, digital signal processor, FPGA, switches, processing algorithms).

Accordingly, ever evolving printed circuit board modules induce a strong need for permanent upgrade of data storage systems so that improving online data processing and enabling high-speed remote storing and retrieving data.

However, current backplane structures are inflexible so that upgrading or adding a particular printed circuit board module may require the replacement of the entire backplane. This results in significant expenses and delays associated with systems disassembly and assembly. It is usually undesirable, even intolerable, whether for small, medium, or large-size data storage systems on which a given business depends.

Moreover, current backplanes provide connectors for receiving in a fixed and predefined arrangement of individual printed circuit board modules. In others words, up-to-date backplanes provide a fixed correspondence between module connectors and backplane storage unit connectors. Therefore, customized interconnections, intended for a given achievement, between printed circuit board modules are not supported by current backplanes.

In addition, including in the chassis further backplanes adapted to meet specific operating requirements to be performed by up-to-date printed circuit board modules is another challenging problem. In fact, this results in increased expenses and inconvenience in terms of hardware usage, power, and cooling consumption.

Hence, because of lack of modularity and flexibility of current backplanes, data storage systems upgrade with new data processing methods and/or printed circuit board modules usually turns into heavy investment for service providers, and especially for those having a great number of backplane-based servers.

One object of the present invention is to overcome many or all of the above-discussed shortcomings of currently available backplanes, and offers other advantages over the prior art.

Another object of the present invention is to propose a backplane providing an extra degree of flexibility for upgrading printed circuit board modules mounted thereto.

Another object of the present invention is to propose a backplane architecture enabling flexible use of module connectors.

Another object of the present invention is to promote printed circuit board modules advances that enable high performance remote data processing, storing and retrieving.

Another object of the present invention is to propose a modular backplane which reduces costs of printed circuit board modules upgrading.

Another object of the present invention is to propose a modular backplane enabling various use cases of the module connectors so that printed circuit board modules mounted thereto could perform particular processing tasks. Another object of the present invention is to propose a module connector compatible with existing bus standards

US4811275 A discloses a backplane according to the preamble of claim 1.

### SUMMARY OF THE INVENTION

The invention is set out in the appended set of claims. The dependent claims set out particular embodiments.

### DESCRIPTION OF THE DRAWING

The objects, advantages and other features of the present invention will become more apparent from the following disclosure and claims. The following non-restrictive description of preferred embodiments is given for the purpose of exemplification only with reference to the accompanying drawings in which:
- FIG.1 is a block diagram illustrating a backplane according to various embodiments;
- FIG.2 is a block diagram illustrating module connectors and a card edge connectors according to various embodiments;
- FIG.3 is a block diagram illustrating printed circuit board modules mounted to a backplane according to various embodiments;
- FIG.4 is a block diagram illustrating a connector pinout according to an illustrative embodiment.

Throughout the specification, similar reference numerals refer to similar or identical elements in all figures of the drawing.

### DETAILED DESCRIPTION OF ILLUSTRATIVE EMBODIMENTS

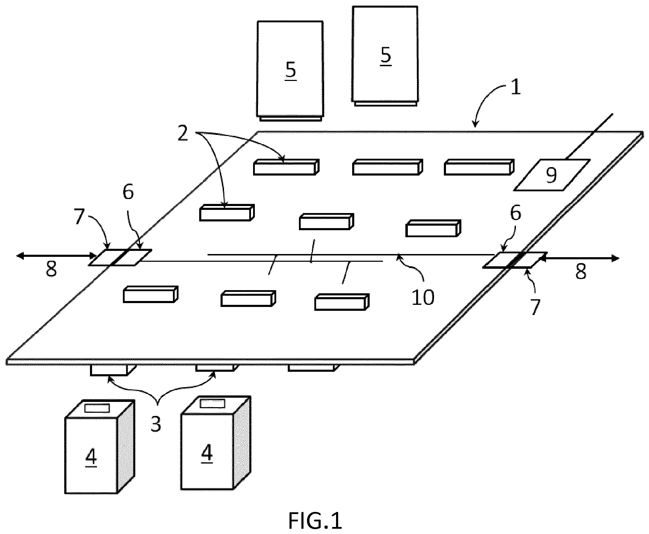

With reference to FIG. 1, there is shown a block diagram representation of a backplane **1.** Such a backplane may be affixed in a rack-mountable chassis, or included within a data server or more generally within a data storage system.

This backplane **1** includes a docking base configured to receive a plurality of storage units **4** and printed circuit board modules **5** which holds them coupled and remotely accessible. Removable storage units **4** and removable printed circuit board modules **5** may be mounted to the backplane **1** through appropriate backplane connectors **2-3.**

In fact, the backplane **1** comprises
- a set of storage backplane connectors **3** configured to receive correspondent connectors of storage units **4;**
- a set of module connectors **2** (also said slots or card backplane connectors) configured to receive correspondent card edge connectors of printed circuit board modules **5** (i.e. adapted to have plugged therein printed circuit board modules **5**);
- one or more network interfaces **7** (such as a Ethernet network interface) which are connectible with a network and exchange data therewith according to a network protocol;
- one or more switch **6** and backplane buses **10** (transmission lines) configured to interconnect, according to predefined bus protocols, storage backplane connectors **3,** module connectors **2** and network interfaces **7.** The backplane buses **10** are adapted to enable standard interfaces, such as SAS (Serial Attached Small Computer System Interface) bus, SATA (Serial Advanced Technology Attachment) bus, Peripheral Component Interconnect (PCI) bus, PCI express (PCIe) bus, PCI extended (PCI-X) bus, or Ethernet bus;
- a shared power connector **9** to receive input power and supply, preferably, regulated electric power to electronic components mounted to the backplane **1.**

In the illustrative embodiment of FIG.1, the backplane **1** comprises two network interfaces **7.** A network interface may be connected to a first common communication bus **8** such as a Gigabit Ethernet bus, while the other may be connected to a second common communication bus **8** such as an Intranet connection (e.g. a management network or an inter/intra data-center network), or any other port providing network connectivity to the backplane **1.**

Thus, the printed circuit board modules **5** and the storage units **4** may be remotely accessed through the network interfaces **7** based on backplane Ethernet standard, such as 10GBASE-KR, 10GBASE-KX4, or 40GBASE-KR4.

The switch **6** enables, through backplane buses **10** (for instance, PCIe bus, SATA bus or Ethernet bus), printed circuit board modules **5** connection to their corresponding storage units **4.**

Storage backplane connectors **3** are configured to receive hard disk drives (HDDs). More generally, the storage unit **4** may be one or more hard disk(s) or any other appropriate data storage device (e.g. CD-ROM drives, or DVD drives). Module connectors **2** are connected to one or more storage backplane connectors **3** through the backplanes buses **10** (for instance, SATA buses or any other bus interface that connects the module connector **2** to mass storage devices such as hard disk drives).

Storage units **4** are used for read and write operations under the control of respective printed circuit board modules **3** (in accordance with local instructions and/or received ones through the Ethernet connection **8**). For example, a printed circuit board module **5** may be in charge of data verification (error detection and correction), data formatting for storage in one or more storage unit **4,** data compression/decompression, and/or data encryption/decryption). To that end, the printed circuit board module **5** may include a processor or a Central Processing Unit (i.e. a CPU card), memory circuits for temporary storage of data within this printed circuit board module **5,** and any other electronic components known in the art for fabricating a printed circuit board. The processor may be any general purpose or application specific processor (such as, Armada 6040/8020, ArmadaXP, Armada 385, or Armada 8040). More generally, the function(s) of the printed circuit board modules **5** are not part of the present invention, so that any desirable function may be performed thereby, without getting out of the scope of the various embodiments.

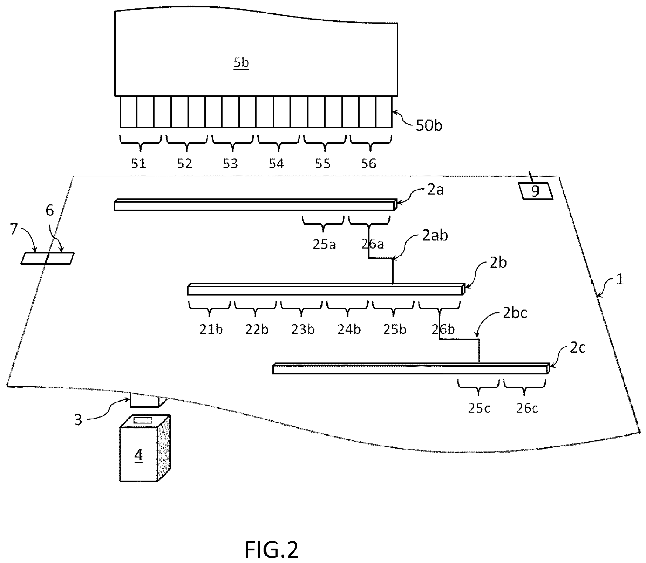

Referring now to FIG. 2, the module connectors **2a, 2b, 2c,** respectively, include a plurality of connector portions **25a-26a, 21b-26b, 25c-26c.**

The connector portion **21b** is dedicated for power and control signals. Pins of this connector portion **21b** are coupled to the power connector **9.** Therefore, the printed circuit board module **5b** plugged into the module connector **2b** receives power feeds through the connector portion **21b.**

The connector portion **22b** is connected to the switch **6,** and thereby to the network interface **7.**

The connector portion **23b** is connected to the storage backplane connector **3.** In one embodiment, the connector portion **23b** is a SATA (or, alternatively, SAS) interface. This SATA interface is operable to send and receive storage data to and from the storage unit **4.**

The connector portion **24b** is connected to the storage backplane connector **3** through an Ethernet bus.

The connector portion **25b** of the module connector **2b** is connected to the connector portion **26a** of the module connector **2a.** It results in that the printed circuit module **5b** plugged into the module connector **2b** may be connected to the printed circuit board module plugged into the module connector **2a.** In one embodiment,
- the connector portion **26a** is an output connector portion for the module connector **2a** (for instance, SATA output or Ethernet output); and
- the connector portion **25b** is an input connector portion for the module connector **2b** (respectively, SATA input or Ethernet input).

The connector portion **26b** of the module connector **2b** is connected to the connector portion **25c** of the module connector **2c.** It results in that the printed circuit module **5b** plugged into the module connector **2b** may be connected to the printed circuit board module plugged into the module connector **2c.** In one embodiment,
- the connector portion **26b** is an output connector portion for the module connector **2b** (for instance, SATA output or Ethernet output); and
- the connector portion **25c** is an input connector portion for the module connector **2c** (respectively, SATA input or Ethernet input).

The connector portions **25a** and **26a** (respectively, **25c** and **26c**) may be, respectively, an input connector portion and an output connector portion for the module connector **2a** (respectively, **2c**).

Consequently, the printed circuit module **5b** plugged into the module connector **2b** may be connected (or coupled) to both or either of the printed circuit board module plugged into the module connector **2a** (said previous module) and the printed circuit board module plugged into the module connector **2c** (said next module).

To that end, the backplanes buses **10** include
- a first backplane bus (strip transmission lines **2ab** providing, for example, a SATA bus or an Ethernet bus) for connecting the connector portion **26a** of the module connector **2a** to the connector portion **25b** of the module connector **2b;** and
- a second backplane bus (strip transmission lines **2bc** providing, for example, a SATA bus or an Ethernet bus) for connecting the connector portion **26a** of the module connector **2a** to the connector portion **25c** of the module connector **2c.**

Further backplane buses (including conventional SATA buses and Ethernet buses) connect the other connector portions to storage backplane connectors **3** and to the switch **6** and/or the network interfaces **7** available on the backplane **1.**

The card edge connector **50b** of the printed circuit board module **5b** is adapted to mate with the module connector **2b.** Similarly, this card edge connector **50b** includes a plurality of connector portions **51-56.** The card edge connector portions **51-56** are adapted to be received, respectively, by connector portions **21b-26b.** The mating of the connector portions **55** and **56** of the card edge connector **50b,** respectively, with the connector portions **25b** and **26b** of the module connector **2b** provides communication signals between this printed circuit board module **5b** and others printed circuit board modules mounted to the backplane **1.** In fact, when it is plugged into the module connector **2b,** the printed circuit board module **5b** may
- send data to or and receive data from a first printed circuit board module plugged into the module connector **2a** through the transmission lines **2ab** (e.g. through the SATA bus or Ethernet bus **2ab**); and/or
- send data to or receive data from a second printed circuit board module plugged into the module connector **2c** through the transmission lines **2bc** (e.g. through the SATA bus or Ethernet bus **2bc**).

Thus, performing given processing operations on data to be remotely stored in or retrieved from storage units **4** may be distributed among a plurality of printed circuit board modules **5** mounted to the backplane **1.**

The module connector **2b** comprises, as shown in figure 2, six connector portions **21b-26b** wherein only **25b** and **26b** are connected to other module connectors **2a** and **2c** of the backplane **1.** However, neither the total number of connector portions **21b-26b** of a given module connector **2b,** nor the number of the connector portions **25b-26b** connected to other module connectors are limited to those shown in FIG. 2 for illustration purpose only.

Connector portions **21b-26b** do not need to have identical number of pins. Moreover, both the module connector **2b** and the printed circuit board module **5b** may contain mechanical guiding mechanisms and mechanical keys to insure proper mating.

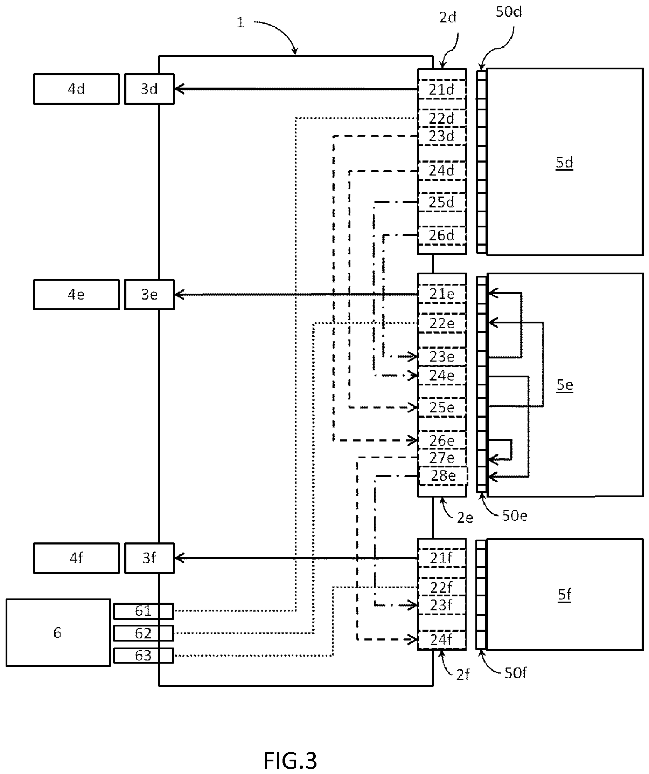

With reference to FIG.3, showing a transversal view of the backplane **1,** the printed circuit board modules **5d, 5e,** and **5f** are, respectively, plugged into their correspondent module connectors **2d, 2e** and **2f.** The module connectors **2d, 2e** and **2f** are adapted to mate with the card edge connectors **50d, 50e,** and **50f.**

The connector portions **21d, 21e** and **21f** are, respectively, connecting (for example through SATA buses) the printed circuit board modules **5d, 5e** and **5f** to storage unit **4d, 4e** and **4f** which are, respectively, mounted to the backplane **1** through storage backplane connector **3d, 3e** and **3f.**

The printed circuit board module **5d, 5e,** and **5f** are, respectively, connected, via the connector portions **22d, 22e** and **22f,** to the port **61-63** of the switch **6** through Ethernet buses (represented by dotted lines in FIG. 3).

A plurality of connectors portions of the module connector **2d,** the module connector **2e** and the module connector **2f** are interconnected through backplanes buses such as Ethernet buses (represented by dash lines in FIG.3) and/or SATA buses (represented by dash-dot lines in FIG.3). Accordingly, the printed circuit board module **5d** is connected to the printed circuit board module **5e** via
- two Ethernet buses (transmission lines linking both the connector portions **23d** to the connector portion **26e,** and the connector portion **24d** to the connector portion **25e**); and
- two SATA buses (transmission lines linking both the connector portions **25d** to the connector portion **24e,** and the connector portion **26d** to the connector portion **23e**).

The printed circuit board module **5e** is in turn connected to the printed circuit board module **5f** via an Ethernet bus (transmission line linking the connector portions **27e** to the connector portion **24f**) and a SATA bus (transmission line linking the connector portion **28e** to the connector portion **23f**).

Advantageously, due to the short distance, the transmission lines between the module connectors **2d, 2e** and **2f** provide a high rate connection between printed circuit board modules **5d, 5e** and **5f.** Further, information is directly communicated between these printed circuit board modules **5d, 5e** and **5f,** without being routed via the switch **6** or the network.

In the illustrative backplane **1** shown in FIG.3, three module connectors **2d, 2f** and **2e** are successively interconnected (or chained) by means of particular backplane buses (Ethernet bus and/or SATA bus), however it will be understood that the number of these module connectors, as well as the number and type (e.g. Ethernet or SATA) of the used backplane buses may vary depending upon the application in which the backplane **1** is used.

One or more switches **6** are mounted to the backplane **1** and connected to appropriate connector portions of the module connectors **2d, 2e,** and **2f.**

In one embodiment, the printed circuit board module **2d, 2e** and **2f** may be
- a processing module, namely configured to perform given processing operations on received data; or
- a passive module, namely a pass-through module.

For instance, the printed circuit board module **5e** comprises cross-connections of connector portions **21e-28e.** As illustrative examples, once the printed circuit board module **5e** is plugged into the module connector **2e,**
- the connector portion **23e** is cross-connected to the connector portion **21e** (e.g. the SATA input connector **23e** is cross-connected to the SATA output connector **21e**);
- the connector portion **24e** is cross-connected to the connector portion **28e** (e.g. the SATA input connector **24e** is cross-connected to the SATA output connector **28e**);
- the connector portion **25e** is cross-connected to the connector portion **22e** (e.g. the Ethernet input connector **25e** is cross-connected to the Ethernet output connector **22e**); and
- the connector portion **26e** is cross-connected to the connector portion **27e** (e.g. the Ethernet input connector **26e** is cross-connected to the Ethernet output connector **27e**).

Those of skill in the art will appreciate that such cross-connections of connector portions by means of the printed circuit board modules permit various data processing operations such data storage duplication, redundancy in access to storage units, or data transfer from one printed circuit board module to another.

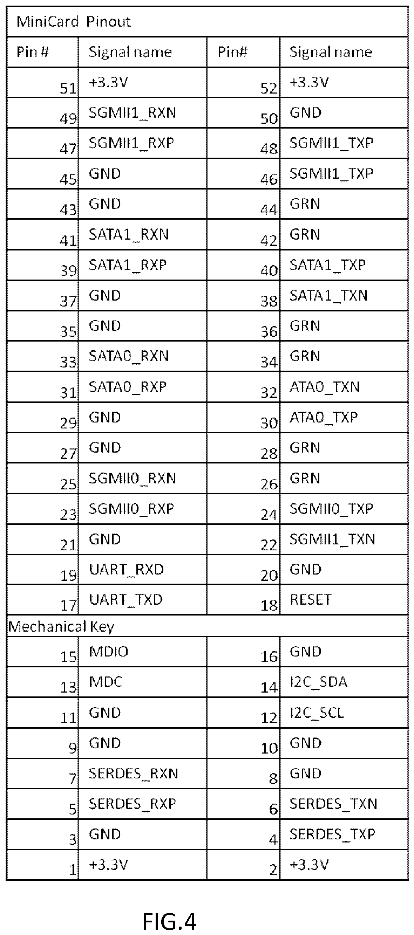

FIG.4 illustrates Connector Pinout and Signal names between a MiniCard and correspondent module connector. In this case, the card edge connector comprises fifty two pins, wherein
- the connector portion composed of pins 4-7 is for stub SATA/Ethernet;
- the connector portion composed of pins 38 and 40 is reserved for outgoing signal from the printed circuit board module to the storage unit;
- the connector portion composed of pins 39 and 41 is reserved for incoming signal from the storage unit to the printed circuit board module;
- the connector portion composed of pin 17 is reserved for serial data transmission to another printed circuit board module mounted to the backplane;
- the connector portion composed of pin 19 is reserved for serial data reception from another printed circuit board module mounted to the backplane.

The definition of remaining pins is unchanged, as they are used in a conventional manner.

More generally, depending on specific implementations, the module connector and its correspondent card edge connector, as well as connector portions may include more or less pins than that of the above example.

In accordance with the above described embodiments, for connecting a first printed circuit board module plugged into a first module connector of a backplane to a second printed circuit board module plugged into a second module connector of the backplane, a connection step, through a first backplane bus (namely, a SATA bus or an Ethernet bus), of a predefined connector portion of the first module connector to a predefined connector portion of the second module connector is performed.

Further, for connecting the said second printed circuit board module to a third printed circuit board module plugged into a third module connector of the backplane, another connection step, through a second backplane bus (namely, a SATA bus or an Ethernet bus), of another predefined connector portion of the said second module connector to a predefined connector portion of the said third module connector is performed.

Advantageously, the above described backplane
- provides a modular and flexible configuration of module connectors so that enabling printed circuit board modules plugged thereinto to communicate and exchange data;
- enables easy and cost effective upgrade of outdated printed circuit board module, without having to replace the entire backplane;
- permits scalable printed circuit board modules deployment as their interconnection may be adapted in accordance with user needs.

## Claims

1. A backplane (1) comprising
- a first module connector (2d) configured to receive a first printed circuit board module (5d); and
- a second module connector (2e) configured to receive a second printed circuit board module (5e);
wherein the first module connector (2d) includes a first connector portion (23d-26d), the second module connector (2e) includes a second connector portion (23e-26e), the first connector portion (23d-26d) being connected to the second connector portion (23e-26e) through a first backplane bus;
**characterized in that** the backplane (1) further comprises
- a switch (6);
- a first port (61) connectable to the switch (6);
- a second port (62) connectable to the switch (6);
- a network interface (7) connectable with a network; and
- the switch (6) configured to interconnect the first module connector (2d), the second module connector (2e) and the network interface;
wherein the first backplane bus is configured to allow information to be directly communicated between the first printed circuit board module (5d) and the second printed circuit board module (5e) without being routed via the switch (6) or the network;
wherein the first module connector (2d) includes a third connector portion (22d) connected to the first port (61); and
wherein the second module connector (2e) includes a fourth connector portion (22e) connected to the second port (62).

2. The backplane (1) of claim 1, further comprising a third module connector (2f) configured to receive a third printed circuit board module (5f), this third module connector (2f) including a fifth connector portion (23f, 24f), wherein the second module connector (2e) further includes a sixth connector portion (27e, 28e), the sixth connector portion (27e, 28e) being connected to the fifth connector portion (23f, 24f) through a second backplane bus, the second backplane bus allowing information to be directly communicated between the second printed circuit board module (5e) and the third printed circuit board module (5f) without being routed via the switch (6) or the network.

3. The backplane (1) of claim 1 or 2, wherein the first backplane bus is a SATA bus or an Ethernet bus.

4. The backplane (1) of claim 2, wherein the second backplane bus is a SATA bus or an Ethernet bus.

5. A system comprising the backplane (1) of claim 1 and a printed circuit board module (5e) configured to be plugged into the second module connector (2e) of the backplane (1), wherein the printed circuit board module (5e) comprises a card edge connector (50e), this card edge connector (50e) including a first card edge connector portion adapted to be received by the second connector portion (23e, 24e, 25e, 26e) of the second module connector (2e), and a second card edge connector portion, this second card edge connector portion being cross-connected to the first card edge connector portion.

6. The system of claim 5, wherein the backplane (1) further comprises a third module connector (2f) configured to receive a third printed circuit board module (5f), this third module connector (2f) including a fifth connector portion (23f, 24f), wherein the second module connector (2e) further includes a sixth connector portion (27e, 28e), the sixth connector portion (27e, 28e) being connected to the fifth connector portion (23f, 24f) through a second backplane bus, the second backplane bus allowing information to be directly communicated between the second printed circuit board module (5e) and the third printed circuit board module (5f) without being routed via the switch (6) or the network.

7. The system of claim 6, wherein the second card edge connector portion is adapted to be received by the sixth connector portion (27e, 28e) of the second module connector (2e) of the backplane (1).

## Patentansprüche

1. Rückwandplatine (1), umfassend
- einen ersten Modulverbinder (2d), der konfiguriert ist, um ein erstes Leiterplattenmodul (5d) aufzunehmen; und
- einen zweiten Modulverbinder (2e), der konfiguriert ist, um ein zweites Leiterplattenmodul (5e) aufzunehmen;
wobei der erste Modulverbinder (2d) einen ersten Verbinderabschnitt (23d-26d) beinhaltet, wobei der zweite Modulverbinder (2e) einen zweiten Verbinderabschnitt (23e-26e) beinhaltet, wobei der erste Verbinderabschnitt (23d-26d) mit dem zweiten Verbinderabschnitt (23e-26e) durch einen ersten Rückwandplatinenbus verbunden ist;
**dadurch gekennzeichnet, dass** die Rückwandplatine (1) ferner Folgendes umfasst:
- einen Schalter (6);
- einen ersten Anschluss (61), der mit dem Schalter (6) verbindbar ist;
- einen zweiten Anschluss (62), der mit dem Schalter (6) verbindbar ist;
- eine Netzwerkschnittstelle (7), die mit einem Netzwerk verbindbar ist; und
- wobei der Schalter (6) konfiguriert ist, um den ersten Modulverbinder (2d), den zweiten Modulverbinder (2e) und die Netzwerkschnittstelle miteinander zu verbinden;
wobei der erste Rückwandplatinenbus konfiguriert ist, um zu ermöglichen, dass Informationen direkt zwischen dem ersten Leiterplattenmodul (5d) und dem zweiten Leiterplattenmodul (5e) kommuniziert werden, ohne über den Schalter (6) oder das Netzwerk geleitet zu werden;
wobei der erste Modulverbinder (2d) einen dritten Verbinderabschnitt (22d) beinhaltet, der mit dem ersten Anschluss (61) verbunden ist; und
wobei der zweite Modulverbinder (2e) einen vierten Verbinderabschnitt (22e) beinhaltet, der mit dem zweiten Anschluss (62) verbunden ist.

2. Rückwandplatine (1) nach Anspruch 1, ferner umfassend einen dritten Modulverbinder (2f), der konfiguriert ist, um ein drittes Leiterplattenmodul (5f) aufzunehmen, wobei dieser dritte Modulverbinder (2f) einen fünften Verbinderabschnitt (23f, 24f) beinhaltet, wobei der zweite Modulverbinder (2e) ferner einen sechsten Verbinderabschnitt (27e, 28e) beinhaltet, wobei der sechste Verbinderabschnitt (27e, 28e) mit dem fünften Verbinderabschnitt (23f, 24f) durch einen zweiten Rückwandplatinenbus verbunden ist, wobei der zweite Rückwandplatinenbus ermöglicht, dass Informationen direkt zwischen dem zweiten Leiterplattenmodul (5e) und dem dritten Leiterplattenmodul (5f) kommuniziert werden, ohne über den Schalter (6) oder das Netzwerk geleitet zu werden.

3. Rückwandplatine (1) nach Anspruch 1 oder 2, wobei der erste Rückwandplatinenbus ein SATA-Bus oder ein Ethernet-Bus ist.

4. Rückwandplatine (1) nach Anspruch 2, wobei der zweite Rückwandplatinenbus ein SATA-Bus oder ein Ethernet-Bus ist.

5. System, umfassend die Rückwandplatine (1) nach Anspruch 1 und ein Leiterplattenmodul (5e), das konfiguriert ist, um in den zweiten Modulverbinder (2e) der Rückwandplatine (1) gesteckt zu werden, wobei das Leiterplattenmodul (5e) einen Kartenrandverbinder (50e) beinhaltet, wobei dieser Kartenrandverbinder (50e) einen ersten Kartenrandverbinderabschnitt, der ausgelegt ist, um durch den zweiten Verbinderabschnitt (23e, 24e, 25e, 26e) des zweiten Modulverbinders (2e) aufgenommen zu werden, und einen zweiten Kartenrandverbinderabschnitt beinhaltet, wobei dieser zweite Kartenrandverbinderabschnitt mit dem ersten Kartenrandverbinderabschnitt querverbunden ist.

6. System nach Anspruch 5, wobei die Rückwandplatine (1) ferner einen dritten Modulverbinder (2f) umfasst, der konfiguriert ist, um ein drittes Leiterplattenmodul (5f) aufzunehmen, wobei dieser dritte Modulverbinder (2f) einen fünften Verbinderabschnitt (23f, 24f) beinhaltet, wobei der zweite Modulverbinder (2e) ferner einen sechsten Verbinderabschnitt (27e, 28e) beinhaltet, wobei der sechste Verbinderabschnitt (27e, 28e) mit dem fünften Verbinderabschnitt (23f, 24f) durch einen zweiten Rückwandplatinenbus verbunden ist, wobei der zweite Rückwandplatinenbus ermöglicht, dass Informationen direkt zwischen dem zweiten Leiterplattenmodul (5e) und dem dritten Leiterplattenmodul (5f) kommuniziert werden, ohne über den Schalter (6) oder das Netzwerk geleitet zu werden.

7. System nach Anspruch 6, wobei der zweite Kartenrandverbinderabschnitt ausgelegt ist, um durch den sechsten Verbinderabschnitt (27e, 28e) des zweiten Modulverbinders (2e) der Rückwandplatine (1) aufgenommen zu werden.

## Revendications

1. Fond de panier (1) comprenant
- un premier connecteur de module (2d) conçu pour recevoir un premier module de carte de circuit imprimé (5d) ; et
- un deuxième connecteur de module (2e) conçu pour recevoir un deuxième module de carte de circuit imprimé (5e) ;
dans lequel le premier connecteur de module (2d) comporte une première partie de connecteur (23d-26d), le deuxième connecteur de module (2e) comporte une deuxième partie de connecteur (23e-26e), la première partie de connecteur (23d-26d) étant connectée à la deuxième partie de connecteur (23e-26e) à travers un premier bus de fond de panier ;
**caractérisé en ce que** le fond de panier (1) comprend en outre
- un commutateur (6) ;
- un premier port (61) pouvant être connecté au commutateur (6) ;
- un second port (62) pouvant être connecté au commutateur (6) ;
- une interface réseau (7) pouvant être connectée à un réseau ; et
- le commutateur (6) conçu pour interconnecter le premier connecteur de module (2d), le deuxième connecteur de module (2e) et l'interface réseau ;
dans lequel le premier bus de fond de panier est conçu pour permettre aux informations d'être directement communiquées entre le premier module de carte de circuit imprimé (5d) et le deuxième module de carte de circuit imprimé (5e) sans être acheminées par l'intermédiaire du commutateur (6) ou du réseau ;
dans lequel le premier connecteur de module (2d) comporte une troisième partie de connecteur (22d) connectée au premier port (61) ; et
dans lequel le deuxième connecteur de module (2e) comporte une quatrième partie de connecteur (22e) connectée au second port (62).

2. Fond de panier (1) selon la revendication 1, comprenant en outre un troisième connecteur de module (2f) conçu pour recevoir un troisième module de carte de circuit imprimé (5f), ce troisième connecteur de module (2f) comportant une cinquième partie de connecteur (23f, 24f), dans lequel le deuxième connecteur de module (2e) comporte en outre une sixième partie de connecteur (27e, 28e), la sixième partie de connecteur (27e, 28e) étant connectée à la cinquième partie de connecteur (23f, 24f) par l'intermédiaire d'un deuxième bus de fond de panier, le deuxième bus de fond de panier permettant aux informations d'être directement communiquées entre le deuxième module de carte de circuit imprimé (5e) et le troisième module de carte de circuit imprimé (5f) sans être acheminées par l'intermédiaire du commutateur (6) ou du réseau.

3. Fond de panier (1) selon la revendication 1 ou 2, dans lequel le premier bus de fond de panier est un bus SATA ou un bus Ethernet.

4. Fond de panier (1) selon la revendication 2, dans lequel le deuxième bus de fond de panier est un bus SATA ou un bus Ethernet.

5. Système comprenant le fond de panier (1) selon la revendication 1 et un module de carte de circuit imprimé (5e) conçu pour être branché dans le deuxième connecteur de module (2e) du fond de panier (1), dans lequel le module de carte de circuit imprimé (5e) comprend un connecteur de bord de carte (50e), ce connecteur de bord de carte (50e) comportant une première partie de connecteur de bord de carte adaptée pour être reçue par la deuxième partie de connecteur (23e, 24e, 25e, 26e) du deuxième connecteur de module (2e), et une deuxième partie de connecteur de bord de carte, cette deuxième partie de connecteur de bord de carte étant interconnectée à la première partie de connecteur de bord de carte.

6. Système selon la revendication 5, dans lequel le fond de panier (1) comprend en outre un troisième connecteur de module (2f) conçu pour recevoir un troisième module de carte de circuit imprimé (5f), ce troisième connecteur de module (2f) comportant une cinquième partie de connecteur (23f, 24f), dans lequel le deuxième connecteur de module (2e) comporte en outre une sixième partie de connecteur (27e, 28e), la sixième partie de connecteur (27e, 28e) étant connectée à la cinquième partie de connecteur (23f, 24f) à travers un deuxième bus de fond de panier, le deuxième bus de fond de panier permettant aux informations d'être directement communiquées entre le deuxième module de carte de circuit imprimé (5e) et le troisième module de carte de circuit imprimé (5f) sans être acheminées par l'intermédiaire du commutateur (6) ou du réseau.

7. Système selon la revendication 6, dans lequel la deuxième partie de connecteur de bord de carte est adaptée pour être reçue par la sixième partie de connecteur (27e, 28e) du deuxième connecteur de module (2e) du fond de panier (1).
